# EUROPEAN PATENT APPLICATION

(11) **EP 4 592 519 A1**
(43) Date of publication of application: **30.07.2025**
(21) Application number: 24382068.5
(22) Date of filing: 25.01.2024
(51) Int. Cl.: F03D 1/06, B29D 99/00

(54) **SHEAR WEB ASSEMBLY**

(71) Applicant: Siemens Gamesa Renewable Energy Innovation & Technology S.L., 48170 Zamudio, Vizcaya (ES)
(72) Inventor: The designation of the inventor has not yet been filed
(74) Representative: SGRE-Association

(57) **Abstract**

The invention describes a shear web assembly (1) for a wind turbine rotor blade (4), comprising a composite shear web (10); at least one electrical cable section (12) bonded to the bag-side (10B) of the shear web (10), wherein the length (L₁₂) of an electrical cable section (12) is at most 80% of the shear web length (L₁₀); and a bonding layer (18) over each electrical cable section (12), wherein a bonding layer (18) comprises resin-infused reinforcing material and is formed concurrently with the composite shear web (10). The invention further describes a method of manufacturing such a shear web assembly (1), and a wind turbine rotor blade (4) comprising such a shear web assembly (1).

## Description

### Background

The rotor blade of a wind turbine may be equipped with various electrical components, for example de-icing mats, trailing edge actuators, various sensors, surge protection devices, etc. After completion of the rotor blade, any such component must be connected to a device such as a power supply, data acquisition unit etc. Therefore, an electrical cable must be provided in the rotor blade interior for each electrical component. Since the shear web is placed during a rotor blade manufacturing step, and since it is a rigid structure with a relatively large area, it is common practice to attach such cables to the shear web so that the cables are already available once the rotor blade curing stage is complete.

The shear web of a wind turbine rotor blade spar is arranged transverse to the chord plane of the rotor blade, and its purpose (along with spar caps at either end) is to convey structural strength to the rotor blade. In the case of a long rotor blade, the shear web is generally made of several layers of light, stiff material such as wood, PET, fibre reinforcing material (FRM) such fibreglass etc., bonded together by resin infusion to obtain a strong structure with favourably low weight. It is known to make use of the material stiffness of cured FRM to hold a cable in place on a shear web: since the shear web is laid horizontally on a mould (e.g. a flat table) and then bagged in preparation for the resin infusion and curing stages, an electrical cable can be positioned on the upward-facing surface or "bag-side" of the shear web, and then covered by a number of fibreglass sheets which are then infused and cured along with the rest of the shear web layup. The weight of a typical cable as used in a wind turbine rotor blade can be in the order of 0.5 kg per metre, so that the portion of cable attached to the shear web of an 80 m rotor blade can weigh about 30 - 40 kg. The covering layer of fibreglass is therefore cut with a sufficient width (e.g. 150 mm) to reliably hold the cable in place on the shear web during the service life of the rotor blade.

Along the bag-side of the layup, the cable extends from the root end to the tip end of the shear web, with excess lengths at each end so that, later on, the cable can be used to connect electrical components to relevant devices as explained above. The excess cable lengths are rolled up and put into protective bags, which are then sealed to prevent resin ingress during the infusion stage. The entire layup (including these protective bags with the excess cable lengths) is vacuum bagged and sealed. After resin-infusion, curing and de-moulding, the protective bags are cut open to access the excess cable lengths.

The main problem with this approach is that the electrical cable can only be mounted to one side of the shear web, namely the "bag-side", for the reason explained above. The "mould-side", which needs to lie flat on the table or mould, does not lend itself to this purpose. When installed in a rotor blade, the shear web divides the rotor blade's interior space in two, referred to herein as the "bag-side space" and the "mould-side space " of the rotor blade interior. The bag-side space faces in one direction (either towards the leading edge of the rotor blade or towards the trailing edge), and the mould-side space faces in the opposite direction. As a result, it is only possible to connect to component cables that are also located in the bag-side space of the rotor blade interior.

However, for various reasons, it may be desirable to deploy one or more electrical components located in the mould-side space of the rotor blade interior, and to connect these using the cables mounted on the bag-side of the web. This necessitates drilling a hole or bore in the shear web so that an electrical cable can pass to the mould-side space. It is desirable for various reasons to secure any such cable to the web surface. However, since an electrical cable has a limited bending radius, any such hole must either be drilled at an angle or be significantly wider than the cable diameter. Such a wide and/or long bore can compromise the structural strength of the shear web and therefore also the rotor blade. For this reason, such holes are only made in exceptional circumstances. In the event that such modifications to the shear web are allowed, the subsequent steps of drilling holes, arranging cables etc., is time-consuming and can add significantly to the manufacturing costs of the rotor blade.

It is therefore an object of the invention to facilitate connections to electrical components on both sides of a rotor blade shear web, while overcoming the problems outlined above.

This object is achieved by the claimed shear web assembly, by the claimed method of manufacturing a shear web assembly; and by the claimed wind turbine rotor blade.

### Description

In the context of the invention, a shear web (or simply "web") shall be understood to be part of a spar dimensioned to convey structural strength to a composite rotor blade of a wind turbine. The shear web is a composite part, generally made of light materials such as balsa wood, polyethylene terephthalate (PET), glass fibre reinforcing material (GFRM), etc., infused with resin and cured to obtain a strong and light structure. Spar caps, which will be positioned at both long edges of the shear web, can be made from resin-infused layers of carbon-fibre reinforced material (CFRM), for example. The complete spar (shear web and spar caps) can be installed in the interior cavity during rotor blade manufacturing procedure; alternatively the components of the spar can be joined at some stage during rotor blade manufacturing procedure.

According to the invention, the shear web assembly comprises a composite shear web; at least one electrical cable section bonded to the bag-side of the shear web, wherein the length of an electrical cable section is at most 80% of the shear web length; and a bonding layer extending over the entire length of each electrical cable section, wherein a bonding layer comprises resin-infused fibre reinforcing material and is formed concurrently with the composite shear web. Since an electrical cable section is permanently bonded to the shear web by the cured FRM bonding layer, any such electrical cable section is referred to herein as a "web-bonded cable".

According to the invention, the method of manufacturing such a shear web assembly comprises steps of: placing a shear web layup on a flat mould or table ; arranging one or more electrical cable sections on the bag-side of the shear web layup; covering each electrical cable section over its entire length with one or more reinforcing material layers; and performing resin infusion and curing to obtain a shear web assembly comprising a shear web and a number of web-bonded cables.

During the layup, infusion and curing stages of manufacture, the shear web layup lies flat on a table or mould and is covered by a vacuum bag, so that one face - the "bag-side" of the web - is directed upwards, while the other face is in contact with the table or mould and is referred to herein as the "mould-side" of the web.

An advantage of the inventive method is that it can be used to provide a shear web that is already set up for connection to various components in the intended rotor blade The inventive method is also favourably easy to carry out. For example, there is no excess cable that needs protection from resin during the infusion and curing stages. Instead, the cable sections can easily be arranged at their intended positions, and no particular skill is required to arrange the covering FRM layers over the cable section(s). After resin infusion and curing, the ends of each cable section can be electrically connected to respective components in a later stage, as will be explained below, in a few straightforward steps.

According to the invention, a wind turbine rotor blade incorporates a spar comprising an instance of the inventive shear web assembly. The web of the shear web assembly can be arranged transverse to the airfoil chord of the rotor blade, between a spar cap in the suction side of the rotor blade and a spar cap in the pressure side of the rotor blade.

Particularly advantageous embodiments and features of the invention are given by the dependent claims, as revealed in the following description. Features of different claim categories may be combined as appropriate to give further embodiments not described herein.

The terms "electrical cable" and "cable" shall be understood to include any suitable type of electrical conductor, e.g. a single strand conductor or a bundle of wires sheathed in an insulating polymer, a flat cable, a copper mesh cable etc. A cable is chosen for its respective purpose, for example to carry a relatively low current between a sensor and a data acquisition device, to carry a relatively high current between a voltage source and a de-icing mat, etc. The width or diameter of a web-bonded cable depends on the thickness or cross-sectional area of the enclosed conductor(s), which in turn depends on the rated current.

In the following, it may be assumed that each end of an electrical cable section comprises an exposed end referred to as a cable terminal. This can have any suitable form, for example a ring or loop which can be used for connecting the cable to a further conductor. Such a ring or loop at the end of a cable is referred to as a "ring terminal".

After resin infusion and curing, an end of a cable section is electrically connected to a respective component as follows:
A bore is formed through the shear web at a position coinciding with the end of the web-bonded cable. For example, if the web-bonded cable terminates in a ring terminal, the bore or hole is formed so that it is located "inside" this ring. Such bores can be formed at each end of each web-bonded cable.

In a next step, an electrically conductive shaft is inserted into the bore to protrude beyond a surface of the shear web, and an electrical connection is then formed between the protruding portion of the shaft and that electrical cable section. Preferably, the shaft is made of a material with good conductive properties, such as copper. The shaft can be a thin pin or rod, for example, with a diameter essentially the same as the bore diameter to ensure a favourably tight fit. The length of the shaft preferably exceeds the thickness of the shear web so that it protrudes from the mould-side of the web by at least several centimetres. The protruding portion of each shaft will later be used to connect the respective web-bonded cable to a component.

The diameter of a bore is determined by the diameter of the shaft, which in turn has a diameter or cross-sectional area similar to the diameter or cross-sectional area of the conductor enclosed by the web-bonded cable, since the shaft will be part of the electrical current path. In an exemplary embodiment, the web-bonded cable might be rated for 200 A, so that a copper stud or shaft with a diameter of 12 mm (M12) would be sufficient, and the bore diameter can also be 12 mm or slightly larger for a favourably tight fit. In a further exemplary embodiment, the web-bonded cable might be rated for 50 A, in which case an M6 copper stud would suffice, and in this case a bore of only 6 mm is needed to form a connection between the web-bonded cable on the bag-side and a cable in the mould-side space of the rotor blade.

In a particularly preferred embodiment of the invention, the shaft is part of a threaded fastener. For example, the fastener can be a stud bolt with a wide flat head and a threaded outer end to mate with a matching threaded nut. Alternatively, the fastener can be a double-ended stud bolt with two threaded outer ends, each of which can mate with a matching threaded nut. In a further preferred embodiment of the invention, the fastener is threaded over the length of the shaft.

In a preferred embodiment of the invention, an electrical connection comprises the terminal at the end of the web-bonded cable in physical connection to the shaft. For example, a ring terminal of the web-bonded cable can be forced into contact with the shaft by a nut threaded onto the fastener. This can be regarded as a preparatory phase of readying a web-bonded cable for connection to a component.

In a further preferred embodiment of the invention, an electrical connection further comprises a physical connection between the shaft and a component cable, i.e. a cable that originates from an electrical component of the rotor blade, or which can be connected to a component of the rotor blade. Here, a rotor blade electrical component can be any of: a de-icing mat, a surge protection device, an electrical sensor, an actuator, etc. A component cable is "loose" or "free" in the sense that it is not bonded to the shear web. A component cable can also terminate in a ring or loop that can be forced into contact with the shaft, for example by a nut threaded onto the fastener.

In an exemplary embodiment, a shaft is placed to protrude from the mould-side of the web, and an electrical connection is formed between the protruding portion of the shaft and the terminal of a component cable located at the mould-side of the shear web. The shaft can also protrude from the bag-side of the web, so that an electrical connection can be formed between the protruding portion of the shaft and the terminal of a web-bonded cable. In this way, a web-bonded cable can be electrically connected to a component cable on the other side of the web.

At the root end of the web, an electrical connection can easily be formed between the root-end terminal of a web-bonded cable, the protruding portion of a shaft, and a component such as a power supply, data acquisition device, etc.

In this way, the inventive shear web assembly contributes to a straightforward assembly procedure, and makes it easy to connect electrical components - located anywhere in the rotor blade - to a power supply, a data acquisition unit, etc. Placement of rotor blade components and their connecting cables is no longer restricted to the bag-side of the shear web, and there is no need to drill unfavourably large holes to feed relatively thick cables between the bag-side and the mould-side of the web.

Various possible configurations of web-bonded electrical cables are possible using the inventive approach. For example, a single electrical cable can extend from the root end of the web to the tip end of the web, and its length can be somewhat shorter than the length of the web. Instead of a single cable, several web-bonded cable sections can be arranged more or less in line, with gaps between adjacent cable terminals. Equally, several web-bonded cables can be arranged in a staggered fashion. In a further embodiment of the invention, two or more parallel arrangements of cable sections can be attached to the bag-side of the web. A web-bonded cable can have an orientation similar to the longitudinal axis of the web, for example.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows a plan view onto a shear web assembly according to an embodiment of the invention;
Figure 2 and Figure 3 show cross-sections through the shear web assembly of Figure 1;
Figures 4 - 7 illustrate steps of the inventive method;
Figures 8 and 9 show further possible configurations of the inventive shear web assembly;
Figures 10 and 11 show connections between electrical components and the inventive shear web assembly, bag-side and mould-side, respectively;
Figure 12 is a simplified cross-section through a rotor blade airfoil equipped with an instance of the inventive shear web assembly;
Figure 13 illustrates a shear web assembly as known from the prior art;
Figure 14 shows a rotor blade equipped with the shear web assembly of Figure 13.

In the diagrams, like numbers refer to like objects throughout. Objects in the diagrams are not necessarily drawn to scale.

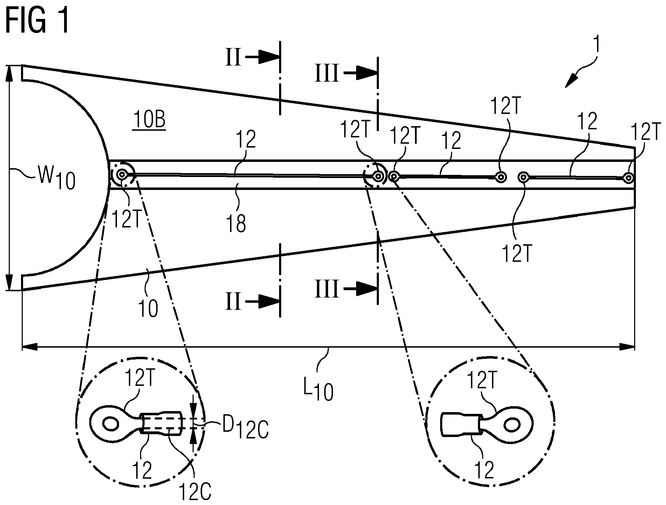

Figures 1 - 12 illustrate the principle of the invention. Some diagrams show a plan view of a shear web 10, with different scales for the length and width of the web. For example, for an 80 m wind turbine rotor blade, the width W₁₀ of the web 10 at the root end can be in the order of 4 metres, while the length L₁₀ of the web 10 can be in the order of 75 metres.

A plan view onto the "bag side" of an exemplary embodiment of the inventive shear web assembly 1 is shown in Figure 1. In this relatively simple embodiment, three electrical cable sections 12 are shown, arranged in line along the web 10. Each conductor of a cable section 12 has a terminal 12T at both ends, for example a ring terminal 12T, as indicated in the enlarged portions. For the sake of clarity, the diagram shows the ring terminal 12T of only one conductor; however it shall be understood that a cable section 12 enclosing multiple conductors will have as many terminals 12T as conductors (for example, a cable section 12 might enclose a phase conductor, a neutral conductor and a ground conductor for connection to an AC power supply: each of these three conductors will have a terminal 12T at both ends of the cable section 12).

As explained above, the term "web-bonded" means that one or more layers of cured FRM 18, indicated by the dotted lines, holds the cable sections 12 in place on the web 10, i.e. the cable sections 12 were completely covered by FRM during layup and, after infusion and curing steps, are coated in a hard cover of FRM. Instead of single cable sections as shown here for the sake of clarity, it shall be understood that two or more cable sections 21 of equal length can be arranged close together side by side underneath a common FRM cover 18.

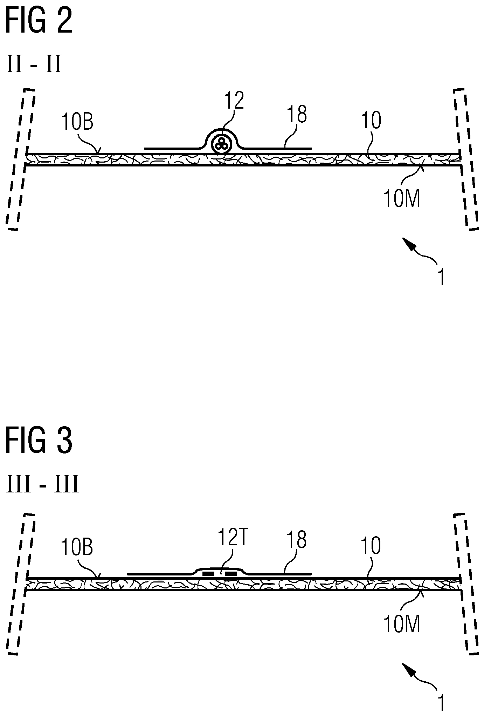

Figure 2 shows a first cross-section II-II through the web 10 of Figure 1 (the positions of the spar caps are indicated by ghost lines). On the bag-side 10B of the web 10, a cable 12 is bonded to the face of the web 10 by one or more layers of cured fibre-reinforced material.

Figure 3 shows a second cross-section III-III through the web 10 of Figure 1. On the bag-side 10B of the web 10, an electrical terminal 12T is bonded to the face of the web 10 by a covering 18 of cured fibre-reinforced material. The terminal is electrically connected to the electrical cable 12.

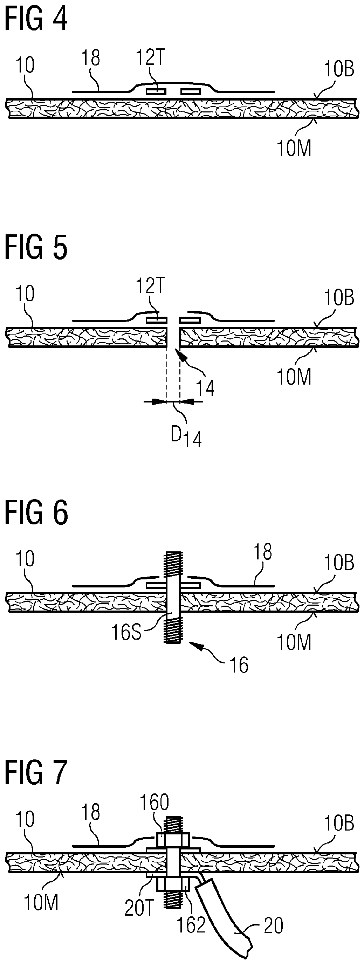

This configuration can then be adapted in order to connect a component located on the mould-side of the web 10, as shown in Figures 4 - 7. In a first step, a portion of the cured FRM cover 18 is removed to at least partially expose the terminal 12T, as shown in Figure 4. A hole 14 or bore 14 is then drilled through the web 10 as shown in Figure 5. The bore 14 can be centred in a ring terminal 12T as shown here. The diameter of the through-hole 14 can be as small as the diameter of the conductor enclosed by the web-bonded cable. In a next stage as shown in Figure 6, a threaded metal fastener 16 is inserted into the hole 14 from the terminal side. In this exemplary embodiment, the fastener 16 is a stud bolt with a threaded portion 16T at its outer end to receive a threaded nut 160. The bolt shaft 16S and the bore 14 preferably have the same diameter to ensure a tight fit. At the mould-side 10M of the web 10, the ring connector 20T of a free electrical cable 20 is placed over the protruding shaft 16S, and a nut 160 is threaded onto the end of the shaft 16S to clamp the ring connector 20T in place as shown in Figure 7. In this way, an electrical connection is made - through the body of the web 10 - between conductors 12T, 20T on both sides 10B, 10M of the web 10.

The shaft of the fastener 16 can have favourably small diameter D₁₆, since its only purpose is to make electrical contact with a cable terminal 12T. The shaft diameter D₁₆ can be is smaller than most cable diameters. The diameter D₁₄ of the bore 14 is therefore also favourably small.

In this exemplary embodiment, the fastener 16 has a hexagonal head which makes good electrical contact with the terminal 12T of a web-mounted cable 12 when the nut 160 is tightened. As an alternative, the fastener 16 can be a double-ended stud bolt with threaded portions at each end.

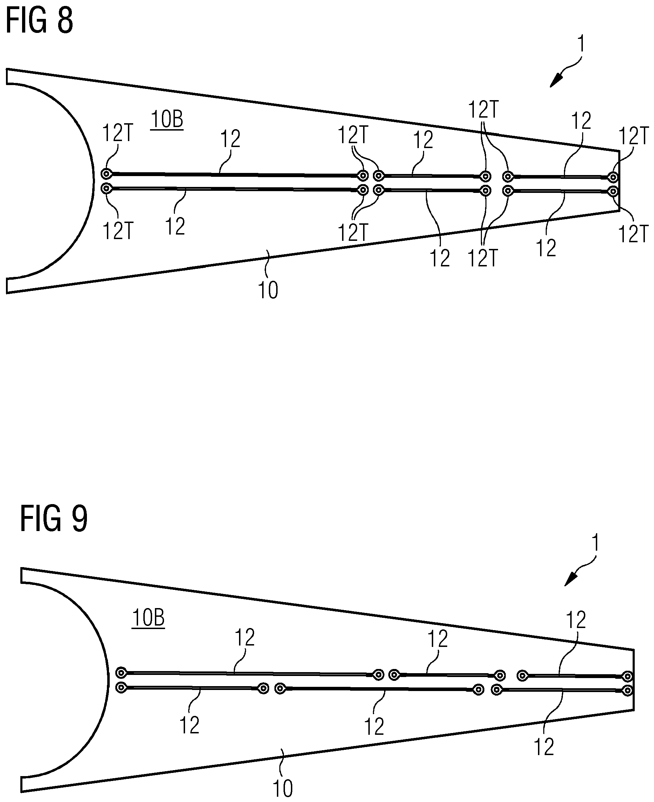

Figures 8 and 9 show further possible configurations of web-bonded electrical cables 12 using the inventive approach. In Figure 8, two parallel arrangements of cable sections 12 are attached to the web 10 (with a total of 12 possible bore locations for accessing the mould-side of the web 10). In Figure 9, cable sections 12 are arranged in a staggered fashion.

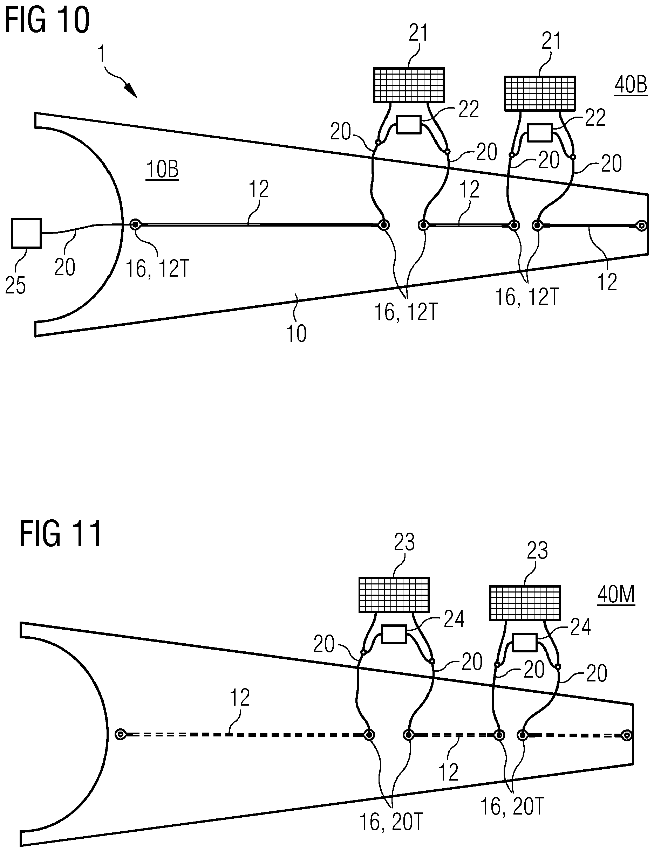

Using the procedure explained in Figures 4 - 7 above, connections can easily be formed between the cable sections 12 and various electrical components. Figure 10 shows - in a simplified schematic manner - how de-icing mats 21 (which shall be understood to be located in the rotor blade shell or skin) and surge protectors 22, with cables 20 accessible from the bag-side space 40B of the rotor blade interior, can be electrically connected to the web-bonded cables 12 using fasteners 16 as explained above. Figure 11 shows how de-icing mats 23 and surge protectors 24, in this case having cables 20 that are accessible only from the mould-side space 40M of the rotor blade interior, can be electrically connected to the web-bonded cables 12. The diagram indicates ring connectors 20T of the component cables 20 secured using fasteners as explained above. The web-bonded cables 12, which are on the bag-side 10B of the web 10, are indicated by ghost lines. A further connection can easily be formed between a root-end terminal 12T of a web-bonded cable 12 (on the left in these two diagrams) and a device such as a power supply 25 for the de-icing mats 21, 23.

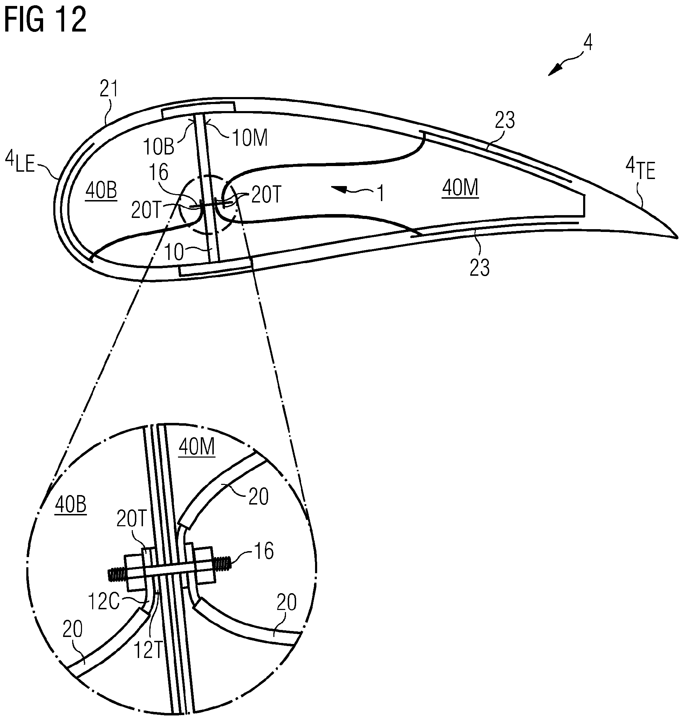

Figure 12 is a simplified cross-section through a rotor blade airfoil 4, showing how the shear web 10 divides the rotor blade interior into a bag-side space 40B (on the same side as the web bag-side 10B) and a mould-side space 40M (on the same side as the web mould-side 10M). The diagram also shows a leading-edge de-icing mat 21 with a cable 20 accessible from the bag-side space 40B of the rotor blade interior, and further trailing-edge de-icing mats 23 with cables 20 accessible from the mould-side space 40M of the rotor blade interior. As shown in the enlarged portion, cable terminals 20T (of equipotential conductors) converge at a shared fastener 16, with the cable terminal 20T of the bag-side cable 20 pressed against the terminal 12T of a web-bonded cable (not visible in the diagram), and the cable terminals 20T of the mould-side cables 20 pressed against the fastener shaft 16S, for example using hex nuts as explained above.

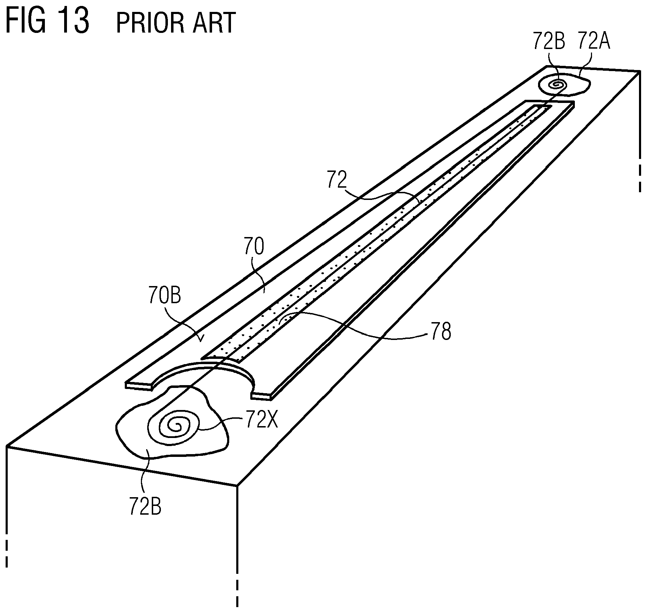

Figure 13 illustrates a prior art approach. The drawing shows a composite shear web 70 manufactured using a known technique. An electrical cable 72 is secured to the bag-side 70B of the web 70 by a number of FRM sheets 78 which are wide enough (e.g. 150 mm) to reliably hold the cable 72 in place on the web 70 during the service life of a wind turbine rotor blade. The cable 72 can later be connected to an electrical component located somewhere in the rotor blade. In order to be able to make such connections once the cured web 70 is installed in a rotor blade, extra lengths 72X of the cable 72 are provided at both ends of the web 10. These extra lengths 72X are generally rolled up and stowed in a protective bag 72B which is then sealed to avoid contact with resin during infusion and curing stages. The layup is then bagged in preparation for infusion and curing steps.

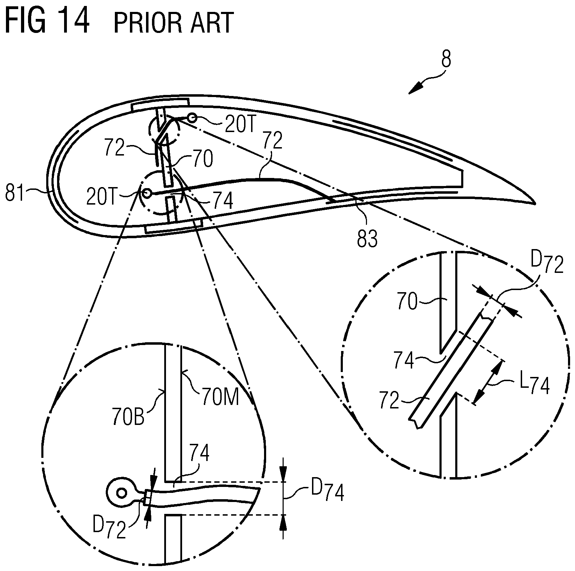

Figure 14 shows, in a cut-away view, the cured shear web 70 of Figure 13 installed in the interior of a wind turbine rotor blade 8, positioned between spar caps of the rotor blade spar. The bag-side 70B of the web 70 in this case faces towards the leading edge 8_{LE} of the rotor blade 8, so that it is straightforward to connect a component 81 located in the front half of the rotor blade 8 to a power supply or similar. However, it is not possible to directly connect a component 83 located on the mould-side 70M of the web 70 in the rear half of the rotor blade 8. This problem has been dealt with by drilling a hole 74 in the cured web 70 so that an electrical cable 72 can be passed from the mould-side 70B to the bag-side 70M (or vice versa). The electrical cable 72, comprising an insulating sheath about one or more copper conductors which may be rated for up to 200 A, can have a diameter D₇₂ in the order of 16 mm. As explained above, because of the large bending radius of such a cable, and because it is generally desirable to lay such cables close to the web surface, the hole 74 must have a diameter D₇₄ much larger than the cable diameter D₇₂, for example 30 mm or more. Alternatively, the hole 74 can be slanted to accommodate the cable, with a length L₇₄ exceeding the thickness of the web. Both options are illustrated in the diagram. However, a hole 74 with such large dimensions L₇₄, D₇₄ can compromise the structural strength of the web 70 and the rotor blade 8.

Although the present invention has been disclosed in the form of preferred embodiments and variations thereon, it will be understood that numerous additional modifications and variations could be made thereto without departing from the scope of the invention. For example, the drawings showing possible configurations of the inventive shear web assembly are only exemplary, and it shall be understood that the number of web-bonded cables, the number of web-bonded cable sections, and the orientations of the web-bonded cables can be varied as desired. For the sake of clarity, it is to be understood that the use of "a" or "an" throughout this application does not exclude a plurality, and "comprising" does not exclude other steps or elements.

## Claims

1. A shear web assembly (1) for a wind turbine rotor blade (4), comprising
- a composite shear web (10);
- at least one electrical cable section (12) bonded to the bag-side (10B) of the shear web (10), wherein the length (L₁₂) of an electrical cable section (12) is at most 80% of the shear web length (L₁₀); and
- a bonding layer (18) over each electrical cable section (12), wherein a bonding layer (18) comprises resin-infused reinforcing material and is formed concurrently with the composite shear web (10).

2. A shear web assembly according to the preceding claim, wherein each end of an electrical cable section (12) comprises a cable terminal (12T), preferably a ring terminal.

3. A shear web assembly according to any of the preceding claims, comprising
- a bore (14) formed through the shear web (10) at a position coinciding with a terminal (12T) of a web-bonded electrical cable section (12);
- an electrically conductive shaft (16S) inserted into the bore (14), wherein the length (L₁₆) of the shaft (16S) exceeds the thickness of the web (10); and
- an electrical connection formed between a protruding portion of the shaft (16S) and a cable terminal (12T, 22T) .

4. A shear web assembly according to the preceding claim, wherein the shaft (16S) is part of a threaded fastener (16), preferably a stud bolt, more preferably a double-ended stud bolt.

5. A shear web assembly according to claim 3 or claim 4, wherein, at the bag-side (10B) of the shear web (10), the cable terminal (12T) of a web-bonded cable section (12) is forced into physical contact with the electrically conductive shaft (16S).

6. A shear web assembly according to any of claims 3 to 5, wherein, at the mould-side (10M) of the shear web (10), the cable terminal (22T) of a component cable (22) is forced into physical contact with the electrically conductive shaft (16S) .

7. A method of manufacturing a shear web assembly (1), which method comprises
- placing a shear web layup (30) on a horizontal mould (3);
- arranging a number of electrical cable sections (12) on the bag-side (10B) of the shear web layup (30);
- covering each cable section (12) over its entire length (L₁₂) with one or more reinforcing material layers (38); and
- performing resin infusion and curing to obtain a shear web assembly (1) in which each cable section (12) is bonded to the shear web (10) by a bonding layer (18).

8. A method according to the preceding claim, comprising a subsequent step of forming a bore (14) through a bonding layer (18) and through the shear web (10), wherein the position of the bore (14) coincides with an end of a web-bonded cable section (12).

9. A method according to any of the preceding method claims, wherein the diameter (D₁₄) of the bore (14) essentially corresponds to the diameter (D_{12C}) of the conductor (12C) enclosed in that web-bonded cable section (12).

10. A method according to any of the preceding method claims, comprising subsequent step of inserting an electrically conductive shaft (16S) into the bore (14), wherein the length (L₁₆) of the shaft (16S) exceeds the thickness of the shear web (10), and wherein the shaft diameter (D₁₆) essentially corresponds to the bore diameter (D₁₄).

11. A method according to the preceding claim, wherein the shaft (16S) protrudes from the bag-side (10B) of the shear web (10), and an electrical connection is formed between the protruding portion of the shaft (16S) and the terminal (12T) of a web-bonded cable section (12).

12. A method according to claim 10 or claim 11, wherein the shaft (16S) protrudes from the mould-side (10M) of the shear web (10), and an electrical connection is formed between the protruding portion of the shaft (16S) and the terminal (22T) of a component cable (20) located at the mould-side (10M) of the shear web (10).

13. A wind turbine rotor blade (4) comprising a shear web assembly (1) according to any of claims 1 to 6.

14. A wind turbine rotor blade according to the preceding claim, comprising
- one or more electrical components (21, 22) arranged between the shear web (10) and the leading edge (4_{LE}); and
- one or more electrical components (23, 24) arranged between the shear web (10) and the trailing edge (4_{TE});
wherein each of the electrical components (21, 22, 23, 24) is connected to a web-bonded electrical cable (12) of the shear web assembly (1).

15. A wind turbine rotor blade according to the preceding claim, comprising an electrical cable (20) extending between a further component (25) and the root-end terminal (12T) of a web-bonded cable (12).
